# FASCICULE DE BREVET EUROPEEN

(11) **EP 3 561 978 B1**
(45) Date de publication et mention de la délivrance du brevet: **02.11.2022**
(21) Numéro de dépôt: 19171405.4
(22) Date de dépôt: 26.04.2019
(51) Int. Cl.: H02G 15/06, H01R 4/44, H01R 13/187

(54) **ISOLATEUR POUR UNE EXTRÉMITÉ DE CABLE**
ISOLATOR FÜR EIN KABELENDE
INSULATOR FOR A CABLE END

(30) Priorité: 27.04.2018 FR 1853756
(43) Date de publication de la demande: 30.10.2019
(73) Titulaire: Silec Cable, 77876 Montereau Fault Yonne (FR)
(72) Inventeur: MAMMERI, Mohamed, 89100 PARON (FR); TOP, Abdou-Karim, 77250 Ecuelles (FR); CORLU, Yanis, 77876 MONTEREAU-FAULT-YONNE (FR); TABOULOT, Michel, 77876 MONTEREAU-FAULT-YONNE (FR)
(74) Mandataire: Decorchemont, Audrey Véronique Christèle

(56) Documents cités:
- EP-A1- 0 429 734
- DE-A1-102014 119 116
- JP-A- 2012 075 266
- US-A- 3 826 860
- US-A- 5 280 136

## Description

L'invention concerne un isolateur pour une extrémité d'un câble.

### ARRIERE PLAN TECHNOLOGIQUE DE L'INVENTION

Dans le domaine du transport d'électricité, il est connu d'équiper l'extrémité d'un câble d'un isolateur notamment pour permettre la jonction avec une extrémité d'un autre câble. Le corps de l'isolateur présente généralement un canal central à l'intérieur duquel est agencé un système connecteur dans lequel on vient loger le toron de l'extrémité de câble considérée.

Un tel isolateur s'avère particulièrement utile dans le cas de câble de transport d'énergie électrique haute tension ou moyenne tension.

Cependant, il arrive que le système connecteur subisse de très fortes contraintes électriques et thermiques, du fait des tensions associées aux câbles. Ainsi, en cas d'une surtension, le système connecteur peut se trouver détérioré.

Le document US 5 280 138 décrit une protection de câble présentant une section en C.

Le document DE 10 2014 119 116 décrit une pièce de raccordement à un câble en aluminium.

Le document EP 0 429 734 décrit un dispositif pour la connexion d'un câble à un appareil électrique.

Le document JP 2012 075 266 décrit un manchon polymère.

### OBJET DE L'INVENTION

Un but de l'invention est de proposer un isolateur pour une extrémité d'un câble qui soit moins sensible aux contraintes thermiques et électriques qui lui sont imposées.

### BREVE DESCRIPTION DE L'INVENTION

L'invention qui est définie par la revendication 1 ci-jointe concerne ainsi un isolateur pour une extrémité d'un câble, l'isolateur ayant un corps longitudinal dans lequel est ménagé un canal central, l'isolateur comprenant un système connecteur agencé dans le canal central, ledit système comprenant une broche de connexion destinée à loger un toron de l'extrémité du câble, ladite broche étant conformée de sorte à présenter une surface interne crantée, le système comportant deux mâchoires entourant la broche pour la serrer entre elles.

De façon surprenante, le crantage de la surface interne, soit la surface en contact avec le toron, permet d'assurer une très bonne connexion entre le toron et la broche tout en limitant une détérioration de la broche notamment en cas de surtension dans l'extrémité du câble.

Optionnellement, la broche est monobloc.

Optionnellement, la broche comporte au moins une fente.

Optionnellement, la broche est dans un matériau métallique à base de cuivre argenté.

Optionnellement, le système comporte en outre une douille montée sur la broche.

Optionnellement, la douille comporte des lamelles de contact au moins sur sa surface interne.

Selon l'invention, le système comporte une coque de serrage qui vient recouvrir au moins la broche.

Optionnellement, l'invention concerne un isolateur pour une extrémité d'un câble, l'isolateur ayant un corps longitudinal électriquement isolant composite comprenant :
- une couche interne dans laquelle est ménagée un canal central à l'intérieur duquel est logé un système connecteur de l'isolateur destiné à être raccordé à l'extrémité de câble, la couche interne étant dans un matériau formé à partir d'une composition comprenant une résine époxyde et un durcisseur, et
- une couche externe recouvrant la couche interne, ladite couche externe étant dans un matériau formé à partir d'une composition comprenant une silicone.

Ainsi, l'association d'une couche interne à base de résine époxyde/durcisseur et d'une couche externe à base de silicone permet d'obtenir un corps présentant une très bonne isolation électrique tout en permettant à l'isolateur d'être « sec ».

En outre, un mode de réalisation non couvert par les revendications

concerne un isolateur pour une extrémité d'un câble, l'isolateur ayant un corps longitudinal électriquement isolant dans lequel est logé un système connecteur de l'isolateur destiné à être raccordé à l'extrémité de câble, l'isolateur comprenant un système de compression comprenant une platine de maintien d'un poussoir contre le système connecteur.

Ceci permet d'améliorer la qualité de la connexion entre le câble et l'isolateur.

Un mode de réalisation non couvert par les revendications concerne également un isolateur comprenant :
- un corps creux tronconique ayant un premier tronçon, un deuxième tronçon et un troisième tronçon, chacun des premier, deuxième et troisième tronçons comprenant une forme tronconique externe d'inclinaison différente ;
- un système connecteur positionné à l'intérieur du corps creux tronconique de manière adjacente au deuxième tronçon, le système connecteur comprenant une broche de connexion destiné à recevoir un toron de câble, la broche de connexion comprenant une portion fendue présentant une surface interne crantée ; et
- un poussoir de forme conique positionné à l'intérieur du corps de manière adjacente au troisième tronçon, le poussoir comprenant un espace intérieur creux pour être couplé au toron du câble et une forme tronconique externe correspondant à un espace creux à l'intérieur du troisième segment.

Optionnellement, le poussoir comprend une première portion et une deuxième portion, la première portion comportant la forme tronconique externe correspondant à l'espace creux à l'intérieur du troisième segment du corps creux tronconique, la deuxième portion étant éloignée du troisième tronçon.

Optionnellement, l'isolateur comprend en outre une bride configurée pour venir se reposer contre la deuxième portion du poussoir.

Optionnellement, l'isolateur comprend en outre une platine de forme annulaire agencée pour pousser la bride contre la deuxième portion du poussoir.

Optionnellement, la bride est positionnée au moins partiellement en dehors du corps creux tronconique.

Optionnellement, le système connecteur comprend en outre au moins deux mâchoires configurées pour être couplées ensemble pour entourer la portion fendue de la broche de connexion.

Optionnellement, le système connecteur comprend en outre une douille coaxialement couplée à une portion de la broche de connexion autre que la portion fendue.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures annexées ci-jointes parmi lesquelles :

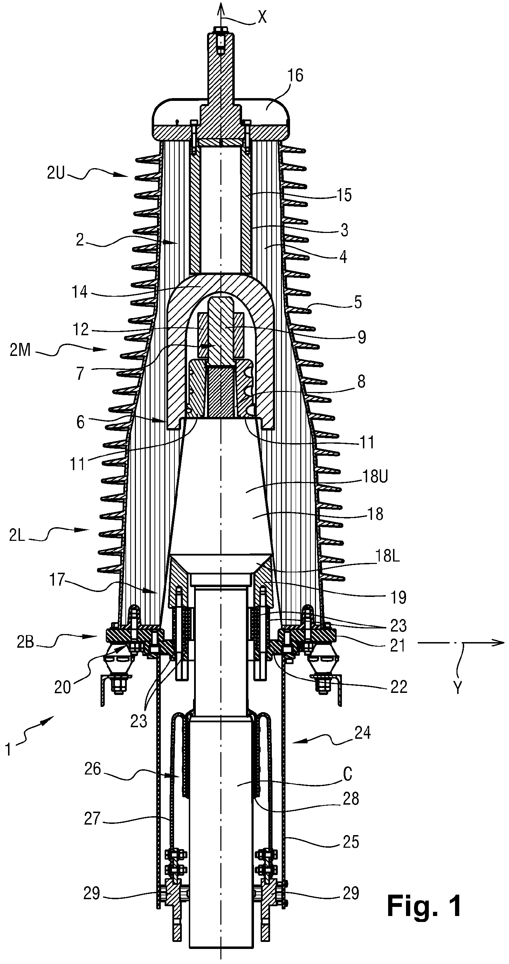

- la figure 1 est une vue en coupe longitudinale d'un isolateur selon un mode de réalisation particulier de l'invention,

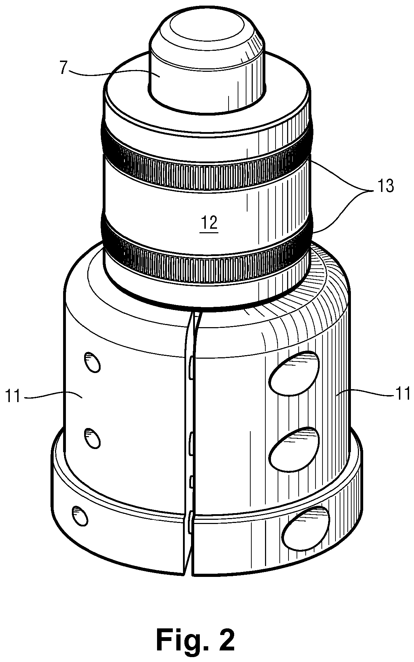

- la figure 2 est une vue en trois dimensions d'une partie d'un système connecteur de l'isolateur illustré à la figure 1,

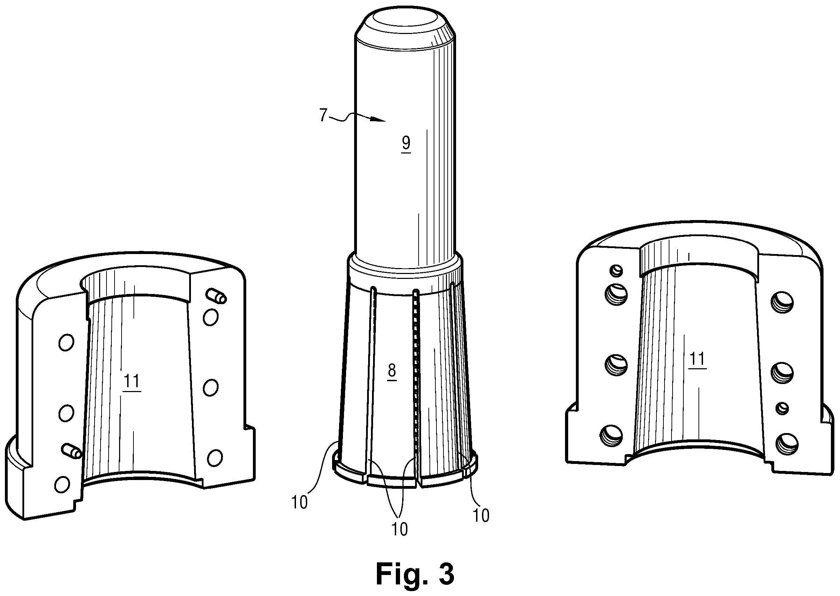

- la figure 3 est une vue en trois dimensions éclatée de la broche et des deux mâchoires du système connecteur illustré à la figure 2,

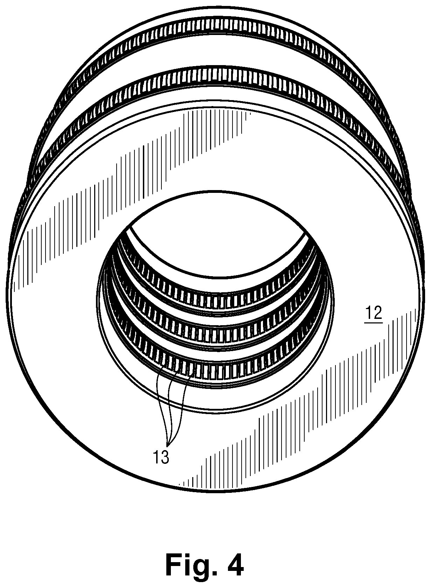

- la figure 4 est une vue en trois dimensions de la douille du système connecteur illustré à la figure 2.

### DESCRIPTION DETAILLEE DE L'INVENTION

En référence aux différentes figures, l'isolateur d'extrémité de câble, généralement désigné en 1, selon un mode de réalisation particulier de l'invention est ici associé à un câble C de transport d'énergie électrique haute tension (soit ici une tension supérieure ou égale à 72.5 kV).

L'isolateur 1 forme ainsi ici une extrémité extérieure autoporteuse sèche pour un câble C haute tension comme une extrémité extérieure autoporteuse sèche 100 kilovolts.

L'isolateur 1 respecte donc ainsi un environnement « écoconception ».

Cette application n'est bien entendu pas limitative et on pourra associer l'isolateur 1 à d'autres types de câbles. Par exemple l'isolateur 1 pourra former une extrémité extérieure autoporteuse sèche 90 kilovolts.

### CORPS DE L'ISOLATEUR

L'isolateur 1 comporte un corps 2 longitudinal dans une matière électriquement isolante s'étendant selon un premier axe X. Ledit corps 2 est un solide de révolution de premier axe X.

Ledit corps 2 comporte un tronçon supérieur 2U tronconique, un tronçon intermédiaire 2M tronconique (plus incliné que le tronçon supérieur 2U) et un tronçon inférieur 2L tronconique (moins incliné que le tronçon intermédiaire 2M mais davantage que le tronçon supérieur 2U), le corps 2 s'élargissant progressivement depuis son extrémité supérieure jusqu'à son extrémité inférieure.

Un canal 3 central est ménagé dans le corps de sorte à s'étendre selon le premier axe X pour déboucher aux deux extrémités supérieure et inférieure du corps 2. Ledit canal 3 est ainsi coaxial au corps 2.

Ledit canal 3 est typiquement un solide de révolution selon le premier axe X. Ledit canal 3 comporte ici un tronçon supérieur cylindrique droit, un tronçon intermédiaire cylindrique droit et un tronçon inférieur tronconique, le canal 3 s'élargissant progressivement depuis son extrémité supérieure jusqu'à son extrémité inférieure.

Le corps 2 est ici composé de deux couches chacune électriquement isolante: une couche interne 4 à l'intérieur de laquelle est ménagé le canal 3 et une couche externe 5 recouvrant la couche interne 4. Le corps 2 est donc dit composite.

La couche interne 4 est dans un matériau formé à partir d'une première composition comprenant un système de résine à couler composé d'une résine époxyde et d'un durcisseur.

Quant à la couche externe 5, elle est dans un matériau formé à partir d'une deuxième composition comprenant au moins une silicone.

Préférentiellement, la couche externe 5 est conformée de sorte à présenter une succession de jupes entourant chacune circonférentiellement le corps 2 à des hauteurs différentes. Chaque jupe est ainsi inclinée vers l'extrémité inférieure du corps 2 de sorte à favoriser un allongement des lignes de fuite de l'isolateur 1. Les jupes s'étendent sur toute la hauteur (selon le premier axe X) du corps 2, la distance séparant deux jupes successives étant la même sur toute la hauteur du corps 2.

La couche externe 5 est par exemple obtenue par moulage.

L'association d'une couche interne 4 à base de résine époxyde/durcisseur et d'une couche externe 5 à base de silicone permet d'obtenir un corps 2 présentant une très bonne isolation électrique tout en permettant d'avoir un isolateur 1 dit « sec » c'est-à-dire ne comprenant pas de gaz, de liquide ou de semi-liquide pour assurer son isolation électrique. L'isolateur 1 est donc plus respectueux des normes environnementales.

### SYSTEME CONNECTEUR DE L'ISOLATEUR

L'isolateur 1 comporte en outre un système connecteur 6 comportant un ensemble de raccordement comprenant notamment une broche 7 de connexion recevant le toron du câble C.

La broche 7 est agencée dans le canal 3 au niveau du tronçon intermédiaire du canal 3 qui est adjacent au tronçon intermédiaire 2M du corps 2 et au niveau du tronçon intermédiaire 2M du corps 2. La broche 7 s'étend ainsi dans le canal 3 selon le premier axe X de sorte à être coaxiale au premier axe X.

La broche 7 est ici monobloc, c'est-à-dire constituée d'une seule pièce.

Ceci permet d'améliorer la qualité de la connexion entre le câble C et l'isolateur 1.

De façon particulière, la broche 7 est un solide de révolution selon le premier axe X. La broche 7 comporte une portion inférieure 8 destinée à recevoir le toron et prolongée d'une portion supérieure 9. Les deux portions 8, 9 sont ici conformées chacune en un cylindre droit, les deux portions 8, 9 présentant un diamètre sensiblement égal.

De préférence, la portion inférieure 8 est fendue. Ladite portion inférieure 8 présente ici plusieurs fentes 10 s'étendant chacune sensiblement sur toute la hauteur (selon le premier axe X) de la portion inférieure 8. Les fentes 10 s'étendent ici de sorte à déboucher au niveau de l'extrémité inférieure de la portion inférieure 8. Les différentes fentes sont par ailleurs agencées de manière régulière sur toute la circonférence de la portion inférieure8.

Ceci permet au toron d'être bien reçu dans la broche 7 même si le toron est quelque peu déformé.

En outre, la surface interne de la portion inférieure 8, soit la surface en contact avec le toron, est crantée.

Ce crantage limite en effet l'apparition d'alumine indésirable dans la broche 7. Par « crantée », on entend ici toute modification de la surface interne rompant la linéarité de ladite surface interne. Toute forme de crans pourra être utilisée pour modifier la linéarité de la surface interne.

Selon un mode de réalisation particulier, la surface interne de la portion inférieure 8 est ainsi pourvue de rainures venant cranter ladite surface interne.

De façon particulière, toute la surface interne de la broche 7 est crantée et présente ainsi des rainures espacées d'une manière homogène. La distance séparant deux rainures consécutives est par exemple comprise entre 3 millimètres et 4 millimètres.

De préférence, la surface de la broche (en partie ou en totalité) est traitée par dépôt d'une couche d'argent de 5 à 10 micromètres pour limiter la formation d'alumine et assurer une bonne transition thermique et électrique (par un traitement surfacique de la broche 7).

Ceci permet d'améliorer encore la qualité de la connexion.

La broche 7 est typiquement dans un matériau métallique comme à base d'aluminium, de cuivre, de cuivre argenté ... Ladite broche 7 est par exemple en Cu-a1.

Afin d'améliorer encore la connexion, l'ensemble de raccordement comporte deux mâchoires 11 serrant la broche.

Ceci permet au toron d'être bien maintenu dans la broche 7 même si le toron est quelque peu déformé.

Les deux mâchoires 11 sont agencées dans le canal 3 au niveau du tronçon intermédiaire du canal 3 et du tronçon intermédiaire 2M du corps 2.

Les deux mâchoires 11 sont par ailleurs agencées de sorte à entourer la broche 7 au moins au niveau de la portion inférieure 8 de ladite broche 7. Les deux mâchoires 11 sont ici agencées de sorte à s'étendre sur toute la hauteur de ladite portion inférieure 8 et sur une partie de la portion supérieure 9 de ladite broche 7 à la frontière de ladite portion inférieure 8.

Les deux mâchoires 11 sont solidarisées l'une à l'autre (par exemple par vissage) de sorte à former ensemble un solide de révolution selon le premier axe X. Ledit solide est ainsi concentrique à la broche 7.

Lesdites mâchoires 11 étant identiques, une seule va être à présent décrite, la description s'appliquant également à l'autre mâchoire 11.

La mâchoire 11 est ici monobloc, c'est-à-dire constituée d'une seule pièce.

La mâchoire 11 est ici conformée en un demi-cylindre creux de génératrice le premier axe X. Typiquement, la mâchoire 11 est conformée de sorte à présenter extérieurement et intérieurement une surface conique s'évasant en direction de l'extrémité inférieure de la mâchoire 11. La mâchoire 11 forme ainsi un demi-cône.

Ladite mâchoire 11 est typiquement dans un matériau métallique comme à base de cuivre, de zinc ... Ladite mâchoire 11 est de préférence en laiton.

Afin d'améliorer encore la connexion, l'ensemble de raccordement comporte une douille 12 montée sur la broche.

Ceci permet au toron d'être bien maintenu dans la broche même si le toron est quelque peu déformé.

La douille 12 est ici agencée dans le canal 3 au niveau du tronçon intermédiaire du canal 3 et du tronçon intermédiaire du corps 2.

La douille 12 est par ailleurs montée sur la portion supérieure 9 de la broche 7 de sorte à venir reposer au niveau de son extrémité inférieure sur les deux mâchoires 11. La douille 12 est par ailleurs agencée ici de sorte à s'étendre sur une partie seulement de la hauteur de la portion supérieure 9 de la broche 7, la douille 12 présentant une hauteur inférieure à ladite portion supérieure 9.

La douille 12 est de préférence monobloc c'est-à-dire constituée d'une seule pièce. La douille 12 est ici conformée en un solide de révolution selon le premier axe X. La douille 12 est ainsi coaxiale à la broche 7.

La douille 12 est typiquement conformée en un cylindre droit.

Ladite douille 12 est typiquement dans un matériau métallique comme à base d'aluminium, de cuivre, de laiton, de laiton argenté ... Ladite douille 12 est de préférence en laiton argenté.

Comme pour la broche, la surface de la douille (en partie ou en totalité) pourra être traitée par dépôt d'une couche d'argent de 5 à 10 micromètres pour limiter la formation d'alumine et assurer une bonne transition thermique et électrique.

Selon un mode de réalisation préféré, la douille 12 comporte des lamelles 13 (dont une partie seulement est référencée ici) sur sa surface externe et/ou sa surface interne destinées à venir au contact d'une coque 14 décrite ci-dessous et/ou de la broche 7. De préférence, la douille 12 comporte des lamelles 13 sur ses deux surfaces externe et interne.

La douille 12 est ainsi ici conformée de sorte que sa surface interne soit en contact avec la surface externe de la portion supérieure 9 de la broche 7 par l'intermédiaire de ces lamelles 13 uniquement.

Ceci améliore la connexion entre la broche 7 et l'isolateur 1.

Les lamelles 13 sont ici agencées sur la douille 12 de sorte à former conjointement au moins un anneau coaxial à la douille 12. Typiquement les lamelles 13 sont agencées de sorte à former au moins deux anneaux sur la surface interne et/ou au moins deux anneaux sur la surface externe tous coaxiaux à la douille 12. Les anneaux de la surface externe peuvent ou non être au même niveau que ceux de la surface interne si la douille 12 en comporte sur ses deux surfaces.

Chaque lamelle 13 est en outre agencée sur la douille 12 de sorte à s'étendre individuellement selon le premier axe X.

Chaque lamelle 13 est ici monobloc, c'est-à-dire constituée d'une seule pièce. Chaque lamelle 13 est typiquement dans un matériau métallique comme à base de cuivre, de cuivre béryllium... Chaque lamelle 13 est de préférence à base de cuivre béryllium.

Chaque lamelle 13 est élastiquement déformable. A cet effet, chaque lamelle 13 est d'une épaisseur très fine typiquement comprise entre ici 0.15 millimètre et 0.5 millimètres.

Les différentes lamelles 13 sont de préférence toutes identiques.

Typiquement les lamelles 13 sont rapportées sur la douille 12. Par exemple des rainures sont ménagées dans la douille 12 pour l'agencement de ces lamelles.

L'ensemble de raccordement comporte par ailleurs une coque 14 de serrage qui vient recouvrir la douille 12, la broche 7 et les deux mâchoires 11, afin de bien plaquer ces différents composants entre eux.

La coque 14 est ici agencée dans le canal 3 au niveau du tronçon intermédiaire du canal 3 et du tronçon supérieur du canal 3 qui est adjacent au tronçon supérieur 2U du corps 2, ainsi qu'au niveau du tronçon intermédiaire 2M du corps 2 et du tronçon supérieur 2U du corps 2.

La coque 14 est par ailleurs agencée dans l'ensemble de raccordement de sorte à venir entourer la broche 7, la douille 12 et les deux mâchoires 11. La coque 14 est par ailleurs agencée ici de sorte à s'étendre (selon le premier axe X) au-dessus de la broche 7 jusqu'en dessous des deux mâchoires 11.

La coque 14 est de préférence monobloc c'est-à-dire constituée d'une seule pièce. La coque 14 est ici conformée en un solide de révolution selon le premier axe X. La coque 14 est ainsi coaxiale à la broche 7.

La coque 14 est typiquement dans un matériau métallique comme à base de cuivre, de laiton, de laiton argentée ... La coque 14 est de préférence à base de laiton argenté. Comme pour la broche, la surface de la coque 14 (en partie ou en totalité) pourra être traitée par dépôt d'une couche d'argent de 5 à 10 micromètres pour limiter la formation d'alumine et assurer une bonne transition thermique et électrique.

La coque 14 est par exemple d'un seul tenant avec le corps. La coque 14 est ainsi ici moulée conjointement avec le corps 2 lors de la fabrication du corps 2 ou bien le corps 2 est surmoulé sur la coque 14 une fois celle-ci déjà créée. Dans ce dernier cas, de préférence, la surface de la coque 14 (en partie ou en totalité) pourra être traitée par sablage avant le surmoulage du corps 2 afin de favoriser l'adhérence du corps sur la coque 14.

De préférence, la coque 14 est en contact avec la douille 12 uniquement par les lamelles extérieures de la douille 12. De plus, le système connecteur 6 comporte un bloc 15 de liaison de l'ensemble de raccordement à l'extérieur de l'isolateur 1, ledit bloc 15 étant électriquement conducteur et s'étendant depuis l'extérieur de l'isolateur 1 jusqu'à la coque 14 de manière à reposer sur elle.

L'isolateur 1 comporte par ailleurs une calotte 16 fermant l'extrémité supérieure du corps 2, calotte 16 reposant sur le corps 2 et à travers laquelle le bloc 15 s'étend pour atteindre l'extérieur.

En service, le toron est agencé dans la broche 7 puis les deux mâchoires 11 sont agencées autour de la broche 7 et serrées sur la broche 7. Les deux mâchoires 11 permettent ainsi si besoin de déformer la broche 7 afin qu'elle épouse au mieux la forme du toron.

La douille 12 est ensuite agencée sur la broche 7 puis l'ensemble douille et broche est monté serré dans la coque 14.

On assure ainsi une très bonne connexion du câble C à l'isolateur 1.

En outre, un tel système connecteur 6 permet une connexion rapide du toron à l'isolateur 1. On peut ainsi assurer en une 1 heure seulement le raccordement du toron à l'isolateur 1.

Un tel système connecteur 6 permet en outre de pouvoir s'affranchir d'une presse pour un sertissage de la broche 7 sur le toron ce qui facilite grandement le montage de l'isolateur 1 sur le câble C.

### SYSTEME DE COMPRESSION DE L'ISOLATEUR

Afin d'assurer un bon raccordement de l'extrémité de câble C à l'isolateur 1, l'isolateur 1 comporte un système de compression 17 du système connecteur 6.

Ledit système de compression 17 comporte ainsi un poussoir 18 venant reposer contre l'extrémité inférieure du système connecteur 6. Ledit poussoir 18 est ici généralement conformé en un cône de sorte qu'un tel poussoir 18 peut également être appelé « cône de contrainte ».

Le poussoir 18 est ici agencé dans le canal 3 au niveau du tronçon inférieur du canal 3 qui est adjacent au tronçon inférieur 2L du corps 2 ainsi qu'au niveau du tronçon inférieur 2L du corps 2.

Le poussoir 18 est de préférence monobloc c'est-à-dire constitué d'une seule pièce.

Le poussoir 18 est ici conformé en un solide de révolution selon le premier axe X. Le poussoir 18 est ainsi coaxial à la broche 7.

Le poussoir 18 comporte une partie supérieure 18U tronconique, sensiblement de même forme que le tronçon tronconique inférieur du canal 3 afin d'en épouser la forme, et une partie inférieure 18L tronconique, de conicité inversée par rapport à la partie supérieure 18U. La partie inférieure 18L du poussoir 18 n'épouse donc pas la forme du canal 3 ce qui permet d'agencer une bride 19 du système de compression 17 à ce niveau comme cela sera décrit ci-dessous.

Le poussoir 18 est par ailleurs creux afin de permettre à l'extrémité du câble C de passer à travers lui. Le poussoir 18 est en outre conformé de sorte à être porté en service par le câble C. On a ainsi en service un poussoir 18 serré entre les parois du canal 3 et le câble C.

Le poussoir 18 est dans un matériau formé à partir d'une composition comprenant une silicone. Typiquement, le poussoir 18 est dans un même matériau que la couche externe 5 du corps 2.

La bride 19 précitée est agencée dans le canal 3 au niveau du tronçon inférieur du canal 3 et du tronçon inférieur du corps 2. La bride 19 s'étend ainsi dans le canal 3 selon le premier axe X de sorte à être coaxiale au premier axe X (et donc ici au poussoir 18).

La bride 19 est ainsi agencée dans le canal 3 de sorte à reposer contre la partie inférieure du poussoir 18, la bride 19 pouvant dès lors presser le poussoir 18 en direction de la broche 7.

La forme tronconique de la partie inférieure 18L du poussoir 18 permet de répartir la pression exercée par la bride 19 sur le poussoir 18.

La bride 19 est ici monobloc, c'est-à-dire constituée d'une seule pièce.

De façon particulière, la bride 19 est un solide de révolution selon le premier axe X.

La bride 19 est typiquement conformée en un cylindre droit. La bride 19 est bien entendu creuse afin de permettre le passage du câble C à travers elle pour que le câble C puisse atteindre la broche 7.

Afin d'améliorer le contact entre la bride 19 et le poussoir 18, la face supérieure de la bride 19 est de préférence conformée pour épouser la forme en regard du poussoir 18. Ladite face supérieure est ainsi ici inclinée en direction du centre de la bride 19 de façon à épouser la conicité du poussoir 18.

La bride 19 est par exemple dans un matériau métallique tel qu'un matériau à base d'aluminium.

Le système de compression 17 comporte par ailleurs une platine 20 de maintien du poussoir 18.

Selon un mode de réalisation particulier, ladite platine 20 comporte une plaque externe 21 et une plaque interne 22 coopérant toute les deux pour fermer l'extrémité inférieure du corps 2 (à l'exception bien entendu d'un orifice permettant à l'extrémité du câble C d'atteindre la broche 7).

Les deux plaques 21, 22 sont ici monoblocs, c'est-à-dire constituée chacune d'une seule pièce.

La plaque externe 21 est ici généralement conformée en un anneau venant reposer contre l'extrémité inférieure du corps 3. De la sorte, la plaque externe 21 se trouve être coaxiale au premier axe X.

La plaque externe 21 est ici sensiblement de même dimensions dans une direction Y orthogonale au premier axe X qu'une face inférieure 2B du corps 3.

Ladite plaque externe 21 est par exemple dans un matériau métallique tel qu'un matériau à base d'aluminium. Ladite plaque externe 21 est préférentiellement dans le même matériau que la bride 19.

La plaque externe 21 est par ailleurs solidarisée au corps 2, directement au niveau de la face inférieure du corps 2, par exemple par vissage.

La plaque interne 22 est ici généralement conformée en un anneau venant reposer contre l'extrémité inférieure de la plaque externe 21. De la sorte, la plaque interne 22 se trouve être coaxiale au premier axe X.

La plaque interne 22 est de dimensions moins importantes dans la direction Yque celles de la plaque externe 21 afin de refermer davantage le corps 2 tout en laissant passer l'extrémité du câble C.

Ladite plaque interne 22 est par exemple dans un matériau métallique tel qu'un matériau à base d'aluminium. Ladite plaque externe est préférentiellement dans le même matériau que la bride 19.

La plaque interne 22 est par ailleurs solidarisée au corps 2, directement au niveau de la face inférieure de la plaque externe 21, par exemple par vissage. C'est donc la plaque externe 21 qui porte la plaque interne 22.

De préférence, la bride 19 est solidarisée à la platine 20 par l'intermédiaire de ressorts 23. Chaque ressort 23 s'étend parallèlement au premier axe X entre la bride 19 et la platine 20 de sorte former ensemble une couronne coaxiale au premier axe X. Une extrémité de chaque ressort 23 est ici fixée directement à la bride 19 et l'autre extrémité est fixée directement à la plaque interne 22.

De la sorte la bride 19 est uniquement reliée à la platine 20 par l'intermédiaire de la couronne de ressorts 23.

Au sein de la couronne, les différents ressorts 23 sont séparés les uns des autres d'une même distance. La couronne comporte par exemple entre 10 et 18 ressorts.

Lesdits ressorts 23 sont avantageusement des ressorts tendant à éloigner la platine 20 de la bride 19 ce qui permet de presser le poussoir 18 en continu contre le système connecteur 6. Les ressorts 23 sont typiquement des ressorts de compression.

Ceci permet d'améliorer la qualité de la connexion entre le câble C et l'isolateur 1.

De façon avantageuse, le système de compression 20 est constitué d'éléments de forme simple, peu coûteuse de fabrication. Par ailleurs, le nombre d'éléments formant le système de compression 20 demeure limité (les deux plaques 21, 22, la bride 19, le poussoir 18 et les ressorts 23). En outre, le montage dudit système de compression 20 est relativement simple.

### PROTECTION DE L'ISOLATEUR

Dans le prolongement de l'extrémité inférieure du corps 2, l'isolateur 1 comporte une protection 24 assurant une étanchéité de l'isolateur 1.

Ladite protection 24 comporte ainsi un culot 25 solidaire de la platine 20 de manière à s'étendre selon le premier axe X. Le culot 25 est dès lors coaxial au premier axe X (et donc ici au corps 2). Typiquement le culot 25 présente un diamètre extérieur sensiblement égal au diamètre intérieur de la plaque externe 21. De préférence, le culot 25 est solidarisé aux deux plaques 21, 22 par exemple par vissage.

Le culot 25 est ici monobloc, c'est-à-dire constitué d'une seule pièce.

De façon particulière, le culot 25 est un solide de révolution selon le premier axe X. Le culot 25 est bien entendu creux afin de permettre au câble C de passer à travers lui pour pouvoir atteindre la broche 7. Le culot 25 entoure ainsi extérieurement le câble C. Le culot 25 est typiquement conformé en un cylindre droit.

Le culot 25 est par exemple dans un matériau métallique tel qu'un matériau à base d'aluminium.

La protection 24 comporte par ailleurs un dispositif 26 agencé entre le câble C et le culot 25 pour assurer la protection électrique de l'isolateur 1 (notamment en cas de surcharge de tension).

Typiquement le dispositif 26 comporte une tresse 27, agencée entre l'extrémité inférieure du culot 25 et une portion du câble C agencée sous le système de compression.

La tresse 27 est ici agencée de sorte à être coaxiale au premier axe X.

De façon particulière, la tresse 27 est un solide de révolution selon le premier axe X. La tresse 27 entoure ainsi extérieurement le câble C. La tresse 27 est typiquement conformée en un cylindre droit.

La tresse 27 est par exemple dans un matériau métallique tel qu'un matériau à base de cuivre étamé.

De préférence l'extrémité supérieure de la tresse 27 est recourbée intérieurement de sorte que ce soit le rebord interne de la tresse 27 qui se retrouve solidarisé au câble C.

Selon un mode de réalisation particulier, ledit rebord est solidarisé au câble C par l'intermédiaire d'une bague 28. Ladite bague 28 est par exemple collée au câble C et la tresse 27 est elle-même collée à la bague 28. La bague 28 est typiquement dans un matériau métallique tel qu'un matériau à base d'aluminium.

Par ailleurs, l'extrémité inférieure de la tresse 27 est droite et solidarisée à la fois au culot 25 et au câble C par l'intermédiaire d'un ou de plusieurs barreaux 29 eux-mêmes solidarisés à la fois au culot 25 et au câble C.

Les barreaux 29 sont par exemple dans un matériau métallique tel qu'un matériau à base de cuivre.

On assure ainsi une très bonne étanchéité de l'isolateur.

Bien entendu l'invention n'est pas limitée au mode de réalisation décrit et on peut y apporter des variantes sans sortir du cadre de l'invention tel que défini par les revendications.

En particulier, bien qu'ici la partie « corps de l'isolateur » ait été décrite en dépendance de l'invention, ladite partie « corps de l'isolateur » pourra être indépendante de l'invention. On pourra ainsi avoir un système connecteur de l'art antérieur associé au « corps de l'isolateur » décrit.

De même, bien qu'ici la partie « système de compression de l'isolateur » ait été décrite en dépendance de l'invention, ladite partie « système de compression de l'isolateur » pourra être indépendante de l'invention. On pourra ainsi avoir un système connecteur de l'art antérieur associé au « système de compression de l'isolateur » décrit.

De même, bien qu'ici la partie « protection de l'isolateur » ait été décrit en dépendance de l'invention, ladite partie « protection de l'isolateur » pourra être indépendante de l'invention. On pourra ainsi avoir un système connecteur de l'art antérieur associé à la « protection de l'isolateur » décrit.

On pourra bien entendu avoir l'invention associée à un « système de compression de l'isolateur » et/ou un « corps de l'isolateur » et/ou « protection de l'isolateur » de l'art antérieur.

Bien qu'ici la surface interne de la broche soit crantée à l'aide de rainures, la surface interne de la broche pourra être crantée de toute autre manière. La surface interne pourra ainsi être granuleuse par exemple.

Bien qu'ici l'isolateur soit associé à un câble de transport d'énergie électrique haute tension, l'isolateur pourra être associé à un autre type de câble comme un câble de transport d'énergie électrique moyenne tension.

Bien qu'ici les lamelles soient rapportées sur la douille, les lamelles pourront être d'un seul tenant avec la douille.

La douille pourra être dépourvue de lamelle sur sa surface interne et/ou sa surface externe. Dans ce cas, la douille sera malgré tout en contact avec la broche et/ou la coque mais directement par respectivement sa surface interne et/ou sa surface externe.

Les lamelles pourront être portées par la broche et/ou la coque. A la fois la douille et la broche et/ou la douille et la coque pourront porter des lamelles coopérant entre elles pour établir le contact entre les pièces correspondantes.

## Revendications

1. Isolateur (1) pour une extrémité d'un câble (C) **et adapté à la jonction avec une extrémité d'un autre câble**, l'isolateur (1) ayant un corps (2) longitudinal dans lequel est ménagé un canal (3) central, l'isolateur (1) comprenant un système connecteur agencé dans le canal central, ledit système comprenant une broche (7) de connexion destinée à loger un toron de l'extrémité du câble, **caractérisé en ce que** ladite broche est conformée de sorte à présenter une surface interne crantée et le système comporte deux mâchoires (11) entourant la broche (7) pour la serrer entre elles, l'isolateur comportant une coque (14) de serrage **en matériau métallique** qui vient recouvrir au moins la broche (7).

2. Isolateur selon la revendication 1, dans lequel la broche (7) est monobloc.

3. Isolateur selon l'une des revendications 1 ou 2, dans lequel la broche (7) comporte au moins une fente (10).

4. Isolateur selon l'une des revendications précédentes, dans lequel la broche (7) est dans un matériau métallique à base de cuivre.

5. Isolateur selon l'une des revendications précédentes, dans lequel le système comporte en outre une douille (12) montée sur la broche (7).

6. Isolateur selon la revendication 5, dans lequel la douille (12) comporte des lamelles (13) au moins sur sa surface interne.

7. Isolateur selon la revendication 1, dans lequel le corps (2) composite comprend :
- une couche interne (4) dans laquelle est ménagée le canal central (3), la couche interne étant dans un matériau formé à partir d'une composition comprenant une résine époxyde et un durcisseur, et
- une couche externe (5) recouvrant la couche interne, ladite couche externe étant dans un matériau formé à partir d'une composition comprenant une silicone.

8. Isolateur selon la revendication 1, comprenant un système de compression (17) comprenant une platine de maintien d'un poussoir (18) contre le système connecteur.

## Patentansprüche

1. Isolator (1) für ein Ende eines Kabels (C) und zur Verbindung mit einem Ende eines anderen Kabels geeignet: Wobei der Isolator (1) einen länglichen Körper (2) mit einem zentralen Kanal (3) aufweist, wobei der Isolator (1) ein in dem zentralen Kanal angeordnetes Verbindungssystem aufweist, wobei das System einen Verbindungsstift (7) aufweist, der dazu bestimmt ist, eine Litze des Endes des Kabels aufzunehmen, wobei das System zwei Backen (11) umfasst, die den Stift (7) umgeben, um ihn einzuklemmen, wobei der Isolator eine Klemmschale (14) aus metallischem Material umfasst, die den Stift (7) weniger bedeckt.

2. Isolator nach Anspruch 1, wobei der Stift (7) einstückig ist.

3. Isolator nach einem der Ansprüche 1 oder 2, wobei der Stift (7) mindestens einen Schlitz (10) aufweist.

4. Isolator nach einem der vorhergehenden Ansprüche, wobei der Stift (7) aus einem metallischen Material auf Kupferbasis besteht.

5. Isolator nach einem der vorhergehenden Ansprüche, wobei das System außerdem eine Hülse (12) umfasst, die an dem Stift (7) angebracht ist.

6. Isolator nach Anspruch 5, bei dem die Hülse (12) zumindest auf ihrer Innenfläche Lamellen (13) aufweist.

7. Isolator nach Anspruch 1, wobei der Körper (2) umfasst:
- eine innere Schicht (4), in der der zentrale Kanal (3) ausgebildet ist, wobei die innere Schicht aus einem Material besteht, das aus einer Zusammensetzung gebildet wird, die ein Epoxidharz und einen Härter umfasst, und
- eine äußere Schicht (5), die die innere Schicht bedeckt, wobei die äußere Schicht aus einem Material besteht, das aus einer Zusammensetzung gebildet wird, die ein Silikon enthält.

8. Isolator nach Anspruch 1, mit einem Kompressionssystem (17), das eine Platte zum Halten eines Stößels (18) gegen das Verbindungssystem umfasst.

## Claims

1. Insulator (1) for an end of a cable (C) and adapted for joining with an end of another cable, the insulator (1) having a longitudinal body (2) in which there is provided a central channel (3), the insulator (1) comprising a connector system arranged in the central channel, said system comprising a connecting pin (7) intended for housing a strand of the end of the cable, **characterised in that** said pin is shaped so as to have a notched inner surface and the system comprises two jaws (11) surrounding the pin (7) to clamp it therebetween, the insulator comprising a clamping shell (14) made of metallic material which comes to cover at least the pin (7).

2. Insulator as claimed in claim 1, wherein the pin (7) is made of one piece.

3. Insulator as claimed in any one of claims 1 or 2, wherein the pin (7) comprises at least one slot (10).

4. Insulator as claimed in any one of the preceding claims, wherein the pin (7) is made of a copper-based metallic material.

5. Insulator as claimed in any one of the preceding claims, wherein the system further comprises a bush (12) mounted on the pin (7).

6. Insulator as claimed in claim 5, wherein the bush (12) comprises fingers (13) at least on its inner surface.

7. Insulator as claimed in claim 1, wherein the composite body (2) comprises:
- an inner layer (4) in which there is provided the central channel (3), the inner layer being made of a material formed from a composition comprising an epoxy resin and a curing agent, and
- an outer layer (5) covering the inner layer, said outer layer being made of a material formed from a composition comprising a silicone.

8. Insulator as claimed in claim 1, comprising a compression system (17) comprising a plate for keeping a pusher (18) against the connector system.
